# EUROPEAN PATENT APPLICATION

(11) **EP 4 462 080 A1**
(43) Date of publication of application: **13.11.2024**
(21) Application number: 22920699.0
(22) Date of filing: 11.01.2022
(51) Int. Cl.: G01C 21/36, G06T 19/00

(54) **DEVICE AND METHOD FOR PROVIDING AUGMENTED REALITY SERVICE**

(71) Applicant: LG Electronics Inc., Yeongdeungpo-gu Seoul 07336 (KR)
(72) Inventor: SON, Jinho, Seoul 06772 (KR); KIM, Sujin, Seoul 06772 (KR); KANG, Byoungsu, Seoul 06772 (KR); LEE, Jinsang, Seoul 06772 (KR)
(74) Representative: Vossius & Partner Patentanwälte Rechtsanwälte mbB
(86) International application number: PCT/KR2022/000454
(87) International publication number: WO 2023/136366

(57) **Abstract**

The present invention relates to a device and a method for providing an augmented reality service. The device for providing an augmented reality service comprises: a camera; a display unit; a POI object detection unit that detects POI objects from image information of the camera; a coordinate conversion unit that sequentially converts the coordinates of the detected POI objects into coordinates in an orthogonal projection space; a rendering unit that renders AR objects in the orthogonal projection space; and a control unit that causes the coordinate conversion unit to convert the coordinates of the POI objects into coordinates in the orthogonal projection space according to a screen of the display unit, causes the rendering unit to render the AR objects at positions of each of the converted coordinates of the POI objects, and causes the display unit to display the rendered AR objects on an image acquired by the camera.

## Description

### Technical Field

The present disclosure relates to a device and method of providing an augmented reality service, and more particularly, to an augmented reality navigation device and method of providing navigation information using augmented reality.

### Background Art

Nowadays, with the development of technology, augmented reality (AR) technology has emerged, which provides computer-generated virtual images that display useful information by combining them with real-world images. Furthermore, the AR technology has a useful effect that can intuitively provide a user with useful information that is difficult to provide with real-world images, and therefore is used in various fields.

As an application example of the AR technology, there is an AR navigation service device. The AR navigation service device may refer to a navigation device that displays images around a vehicle acquired through a camera provided in the vehicle as virtual images related to preset point-of-interest (POI) entities and provides images around the vehicle combined with the virtual images, and may allow the user to more easily check information necessary for vehicle operation (e.g. road information, traffic situation information, map information, etc.) through the AR navigation service device, and to more intuitively receive information related to a geographical entities around him or her, such as nearby buildings and roads.

For the AR navigation service, a camera that acquires images in front of the user typically has a wide viewing angle (large viewing angle) to acquire an image of a wide area. Furthermore, in the case of a conventional AR navigation device, an AR entity corresponding to a preset POI entity is displayed from a wide-angle image acquired from the camera, and an image in which the AR entity is displayed is provided to the user.

Meanwhile, an image acquired through a wide viewing angle camera may be part of a spherical area corresponding to a wide viewing angle, the spherical area corresponding to the same distance from the camera (e.g., when the viewing angle is 180 degrees, a hemispherical image may be acquired). Therefore, when the image acquired from the camera is displayed on a flat square-shaped display screen, the image may be displayed in a manner in which at least part of the image is distorted due to a difference between the shape of the acquired image and the shape of the display area (e.g., display screen).

Furthermore, image information acquired through a camera includes information to indicate perspective according to a distance between the user and each entity. Therefore, a distortion according to perspective information, that is, depth information, may occur. Therefore, on the display screen, an image having a greater distortion may be displayed as a distance from a reference point corresponding to a front direction of the camera increases.

In addition, the AR navigation device is configured to further display virtual images (AR entities) for each POI entity existing within a space corresponding to an image displayed on the display screen as part of a spherical area corresponding to the wide viewing angle of the camera, that is, a camera space. Therefore, when image distortion occurs as described above, there is a problem in that AR entities corresponding to the POI entity are also displayed in their distorted shapes. Furthermore, such a distortion makes it difficult for the user to identify the contents of AR entities, and there is a problem in that it reduces the visibility of the AR entities.

### Disclosure of Invention

### Technical Problem

The present disclosure aims to solve the above-described problems and other problems, and an aspect of the present disclosure is to provide an AR navigation device and method capable of displaying AR entities without any distortion due to perspective at positions corresponding to respective POI entities in a camera space.

### Solution to Problem

In order to achieve the foregoing and other objectives, according to an aspect of the present disclosure, there is provided an augmented reality (AR) navigation device according to an embodiment of the present disclosure, the device including a camera that acquires a front image, a display that displays an image acquired from the camera and at least one AR entity, a POI entity detection unit that detects point-of-interest (POI) entities from image information acquired through the camera, a coordinate conversion unit that sequentially converts coordinates of the detected POI entities based on a preset conversion matrix to convert them into coordinates in an orthographic projection space, a rendering unit that renders AR entities including information on respective POI entities into a preset orthographic projection space, and a controller that controls the coordinate conversion unit to convert the POI entity coordinates detected by the POI entity detection unit into coordinates in an orthographic projection space according to a screen of the display, controls the rendering unit to render AR entities including information on respective POI entities at respective positions of the POI entity coordinates converted to the coordinates of the orthographic projection space, and controls the display to display the rendered AR entities at the positions of the POI entity coordinates of the image acquired from the camera.

In an embodiment, the coordinate conversion unit may convert the POI entity coordinates detected by the POI entity detection unit into coordinates in a clip space based on a model-view-projection (MVP) transformation matrix, convert the converted POI entity coordinates into coordinates in a normalized device coordinate (NDC) space according to the screen of the display, and convert the coordinates in the normalized space into coordinates in the orthographic projection space according to the screen of the display.

In an embodiment, the clip space, which is a space in which the AR entities are to be rendered, may be a frustum-shaped space according to a field of view (FOV) of the camera, centered on a line of sight of the camera.

In an embodiment, the normalized coordinate system may be a coordinate system in which an area corresponding to a size of the display screen is normalized into a square with a width and height of 2 each.

In an embodiment, the coordinate conversion unit may convert POI entity coordinates in the clip space into coordinates in the NDC space based on an inverse conversion matrix provided by advanced driver assistance systems (ADAS).

In an embodiment, the coordinate conversion unit may normalize coordinate values of respective POI entity coordinates in the clip space by dividing them by a size of the display screen so as to convert the POI entity coordinates in the clip space into coordinates in an NDC space according to the size of the display screen.

In an embodiment, the coordinate conversion unit may convert the POI entity coordinates that have been converted into the coordinates of the NDC space into coordinates in an orthographic projection space that corresponds to the size of the display screen and that is generated in a direction perpendicular to a line of sight of the camera.

In an embodiment, the controller may vary sizes of AR entities corresponding to respective POI entities based on distances between respective POI entities in the camera.

In an embodiment, the controller may determine, according to a distance between the camera and a specific POI entity, a size of an AR entity corresponding to the specific POI entity, based on a preset function, wherein the preset function is a quadratic function in which a size of an AR entity is inversely proportional to the square of a change in distance between the specific POI object and the camera.

In an embodiment, among the respective POI entity coordinates converted into the coordinates of the orthographic projection space, when there are coordinates that are close to one another by a predetermined level or more, the controller may modify the coordinate values of the respective POI entity coordinates that are close to one another such that the POI entity coordinates that are close to one another are spaced apart from one another according to distances between the respective POI entities and the camera.

In an embodiment, among the respective POI entity coordinates converted into the coordinates of the orthographic projection space, the controller may determine that the POI entity coordinates with the same coordinates on a specific axis are coordinates that are close to one another by a predetermined level or more, wherein the specific axis is at least one of an X-axis and a Y-axis of the display screen.

In an embodiment, the controller may assign a preset separation value, and modify the coordinate values of the respective POI entity coordinates that are close to one another according to distances between respective POI entities and the camera such that the POI entity coordinates that are close to one another are spaced apart from one another, wherein the preset separation value is reflected in a coordinate value in a direction of the specific axis among the coordinate values of the respective POI entity coordinates that are close to one another.

In an embodiment, the rendering unit may render, when the respective POI entity coordinates that are close to one another are spaced apart from one another according to the preset separation value, AR entities corresponding to respective POI entities according to the positions of the POI entity coordinates that are spaced apart from one another, and render AR entities corresponding to respective POI entities in a reverse order of distances, from long to short, between the POI entities and the camera among the POI entity coordinates that are close to one another.

In an embodiment, the controller may generate a first layer on which an image acquired from the camera is displayed, render the AR entities on a second layer having the same size as the first layer, and control the display to overlap the second layer on the first layer.

In an embodiment, the controller may control the display to display the image acquired from the camera, and control the rendering unit to render AR entities including information on respective POI entities in a designated area of the display screen separately from the image acquired from the camera, and to render connection lines connecting between the respective POI entity coordinates converted into coordinates of the orthographic projection space and the respective AR entities rendered in the designated area.

In an embodiment, the controller may generate a first layer and a second layer corresponding to a size of the display screen, display the image acquired from the camera on the first layer, detect corresponding coordinates corresponding to POI entity coordinates in an orthographic projection space detected from the image acquired by the camera in the second layer, and render AR entities including information on respective POI entities in a designated area of the second layer, render connection lines connecting between the respective rendered AR entities and the respective corresponding coordinates on the second layer, and control the display to overlap the second layer on the first layer.

In order to achieve the foregoing or other objectives, according to an aspect of the present disclosure, there is provided an AR navigation method according to an embodiment of the present disclosure, the method including acquiring a front image through a camera, displaying the acquired image on a display screen, detecting point-of-interest (POI) entities from the acquired image information and detecting coordinates of the detected POI entities, converting the coordinates of the detected POI entities into coordinates in a clip space based on a model-view-projection (MVP) transformation matrix, converting the converted POI entity coordinates into coordinates in a normalized device coordinate (NDC) space according to the display screen, converting the coordinates in the normalized space into coordinates in an orthographic projection space according to the display screen, and rendering AR entities including information on respective POI entities at respective positions of the POI entity coordinates on the display screen converted into coordinates of the orthographic projection space.

### Advantageous Effects of Invention

An AR navigation device and method according to the present disclosure will be described as follows.

According to at least one of embodiments of the present disclosure, the present disclosure may display an image acquired from a camera on a display screen according to a conventional method, as well as convert the coordinates of POI entities in a camera space into coordinates in an orthographic projection space through coordinate conversion into a normalized device coordinate (NDC) space according to a display area, and display AR entities based on the converted coordinates in the orthographic projection space, thereby displaying image information in which a distortion according to depth information is reflected to show perspective, as well as displaying AR entities in which the distortion is not reflected in the display area. Therefore, there is an effect of displaying an actual image with perspective in the display area, as well as preventing the visibility of AR entities from deteriorating, and allowing a user to easily identify the contents of AR entities.

### Brief Description of Drawings

FIG. 1 is a block diagram showing a configuration of an AR navigation device according to an embodiment of the present disclosure.
FIG. 2 is a flowchart showing an operation process of displaying AR entities in a display area in which image information based on image information acquired from a camera is displayed in an AR navigation device according to an embodiment of the present disclosure.
FIGS. 3A and 3B are conceptual diagrams for explaining examples of a frustum-shaped clip space and an NDC coordinate system, respectively.
FIGS. 3C and 3D are conceptual diagrams for explaining examples of a three-dimensional NDC coordinate system and an orthographic projection space, respectively.
FIG. 4 is exemplary diagrams showing examples of navigation information including an AR entity displayed according to an embodiment of the present disclosure, and navigation information including an AR entity in which a distortion according to perspective is conventionally reflected.
FIG. 5 is a conceptual diagram for explaining an example in which an AR navigation device according to an embodiment of the present disclosure displays an augmented reality image using two overlapping layers.
FIGS. 6 and 7 are a flowchart showing an operation process of determining, by an AR navigation device according to an embodiment of the present disclosure, sizes of AR entities differently depending on distances between respective POI entities and a camera, and an example thereof.
FIG. 8 is a flowchart showing an operation process of modifying, by an AR navigation device according to an embodiment of the present disclosure, positions at which AR entities corresponding to POI entities adjacent to one another are displayed.
FIG. 9 is exemplary diagrams showing an example in which the positions of AR entities corresponding to POI entities adjacent to one another on a display area are modified according to the process of FIG. 8.
FIG. 10 is a flowchart showing an operation process of displaying, by an AR navigation device according to an embodiment of the present disclosure, AR entities in one area on a designated display.
FIG. 11 is exemplary diagrams showing an example of an augmented reality image including AR entities displayed according to the operation process of FIG. 10.
FIG. 12 is a flowchart showing an operation process of displaying, by an AR navigation device according to an embodiment of the present disclosure, AR entities in which a distortion is not reflected using two overlapping layers.
FIG. 13 is conceptual diagrams for explaining a process of displaying AR entities according to the operation process of FIG. 12.

### Mode for the Invention

It should be noted that technical terms used herein are merely used to describe specific embodiments, and are not intended to limit the present disclosure. Furthermore, a singular expression used herein includes a plural expression unless it is clearly construed in a different way in the context. A suffix "module" or "unit" used for elements disclosed in the following description is merely intended for easy description of the specification, and the suffix itself is not intended to have any special meaning or function.

As used herein, terms such as "comprise" or "include" should not be construed to necessarily include all elements or steps described herein, and should be construed not to include some elements or some steps thereof, or should be construed to further include additional elements or steps.

In addition, in describing technologies disclosed herein, when it is determined that a detailed description of known technologies related thereto may unnecessarily obscure the subject matter disclosed herein, the detailed description will be omitted.

Furthermore, the accompanying drawings are provided only for a better understanding of the embodiments disclosed herein and are not intended to limit technical concepts disclosed herein, and therefore, it should be understood that the accompanying drawings include all modifications, equivalents and substitutes within the concept and technical scope of the present disclosure. In addition, not only individual embodiments described below but also a combination of the embodiments may, of course, fall within the concept and technical scope of the present disclosure, as modifications, equivalents or substitutes included in the concept and technical scope of the present disclosure.

An AR navigation device described herein may include various devices capable of providing navigation information, and provided with a camera. For example, the AR navigation device may include a mobile phone, a smart phone, a laptop computer, a navigator, a slate PC, a tablet PC, an ultrabook, a wearable device such as a watch-type terminal (smart watch), a glasses-type terminal (smart glasses), a head mounted display (HMD), and the like.

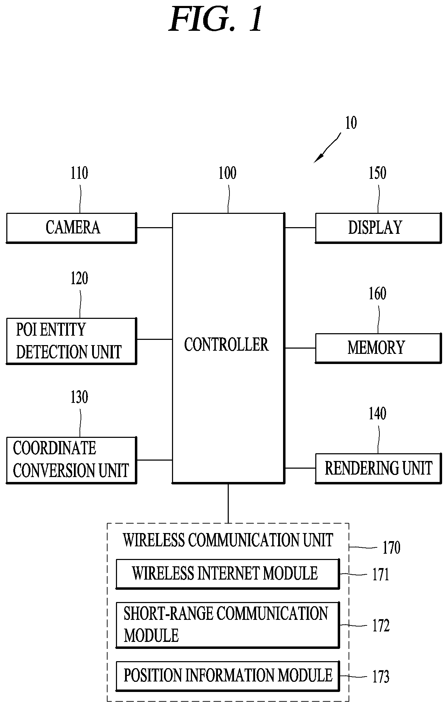

First, FIG. 1 is a block diagram showing a configuration of an AR navigation device 10 according to an embodiment of the present disclosure.

Referring to FIG. 1, the AR navigation device 10 related to the present disclosure is connected to a controller 100, and may include a camera 110 controlled by the controller 100, a POI entity detection unit 120, a coordinate conversion unit 130, a rendering unit 140, a display 150, and a memory 160. The elements shown in FIG. 1 are not essential for implementing the AR navigation device 10, and thus the AR navigation device 10 described herein may have more or fewer element than those listed above.

First, among the elements, the camera 110 is provided to acquire image information around the AR navigation device 10, and may include at least one image sensor to process image frames such as still or moving images acquired by the image sensor. The image frames processed through the image sensor may be displayed on the display 150 or stored in the memory 160 under the control of the controller 100.

Meanwhile, the camera 110 may be provided with a plurality of image sensors constituting a matrix structure, or may include a plurality of cameras constituting the matrix structure. Therefore, the camera 110 may acquire a plurality of image information with various angles and focuses, and may acquire image information corresponding to a wider field of view (FOV). Alternatively, the camera 110 may be provided with an image sensor (e.g., fish-eye lens) configured to have a wide viewing angle. In this case, the camera 110 may also of course acquire image information around the AR navigation device 10 through only one image sensor having the wide viewing angle.

Additionally, the POI entity detection unit 120 may detect POI entities located within a camera space from an image acquired by the camera 110. Furthermore, the POI entity detection unit 120 may acquire coordinates for the detected POI entities. Here, POI entities, which are geographical entities preset by a user such that information related thereto is output in the form of a virtual image, may denote buildings, roads, or geographical features such as rivers or hills. In order to detect those POI entities, the POI entity detection unit 120 may utilize information on a viewing angle of the camera 110, a user's current position, a map around the user's position, and position information on respective geographical entities around the user's position.

Furthermore, with respect to the coordinates of POI entities (hereinafter referred to as POI entity coordinates) detected by the POI entity detection unit 120, the coordinate conversion unit 130 converts the coordinates of the POI entities through a coordinate conversion matrix under the control of the controller 100 into coordinates in a specific space.

As an example, the coordinate conversion unit 130 may convert the respective detected POI entity coordinates into coordinates in a clip space through a model-view-projection (MVP) matrix under the control of the controller 100. Here, the clip space, which is a space for rendering AR entities, may be a frustum-shaped space according to a view formed based on a viewing angle of the camera 110.

Additionally, the coordinate conversion unit 130 may perform coordinate conversion into a normalized space, that is, a normalized device coordinate (NDC) space, in order to determine a position within a display area corresponding to the POI entity coordinates in the clip space. Through such a coordinate conversion into an NDC space, the positions of POI entity coordinates on the display area, corresponding to POI entities in image information acquired by the camera 110, may be determined.

Meanwhile, the coordinates converted into coordinates in the NDC space, which are coordinates of POI entities corresponding to POI entities in the image information acquired by the camera 110, may be coordinates in which depth information according to perspective is reflected. Therefore, the controller 100 may control the coordinate conversion unit 130 to convert the POI entities converted into coordinates in the NDC space through an orthographic projection matrix into coordinates in the orthographic projection space. In this case, the POI entity coordinates in the NDC space may be converted into coordinates of a plane (hereinafter referred to as an orthogonal plane) that is perpendicular to a line of sight of the camera and corresponds to a size of the display area.

Meanwhile, the rendering unit 140 may display a virtual image including information corresponding to a specific POI entity at coordinates on the display area under the control of the controller 100 on the display area. Here, the coordinates on the display area under the control of the controller 100 may be coordinates in an orthographic projection space converted by the coordinate conversion unit 130. That is, the rendering unit 140 may display virtual images including information on each POI entity provided under the control of the controller 100 at a position corresponding to the coordinates of each POI entity in the orthographic projection space.

Here, the display area may be an area in which image information acquired by the camera 110 is displayed. Therefore, the image information displayed in the display area may be image information that reflects a wide viewing angle of the camera 110 and a depth value according to a difference in distance to the camera 110. That is, the image information displayed in the display area may be image information in which a distortion due to the wide viewing angle of the camera and the depth value is reflected.

Accordingly, the virtual images may be displayed on a display area in which image information reflecting the distortion is displayed. That is, virtual images displayed on actual image information acquired by the camera 110 may be AR entities. In this case, the AR entities are displayed at the positions of POI entity coordinates converted into coordinates in an orthographic projection space by the coordinate conversion unit 130, and may also be displayed in an orthographic projection space. Accordingly, the AR entities, which are images displayed on a plane (orthogonal plane) perpendicular to a line of sight of the camera without perspective, may be images without distortion due to the wide viewing angle of the camera 110 and the depth value.

Meanwhile, the display 150 may output various image information that is output from the AR navigation device 10. The image information may be displayed in at least a partial area of the display 150, and an area of the display 150 in which the image information is displayed may be set as a display area. In this case, the controller 100 may determine the NDC space based on the display area, and the coordinate conversion unit 130 may convert the POI entity coordinates in the clip space into coordinates in the NDC space according to the determined NDC space.

The display 150 may include at least one of a liquid crystal display (LCD), a thin film transistor-liquid crystal display (TFT LCD), an organic light-emitting diode (OLED), and a flexible display. In addition, the display 150 may be disposed to include a touch sensor which senses a touch onto the display 150 so as to receive a control command in a touching manner. In this case, the display 150 may perform a function of a user input interface that can receive user information.

Meanwhile, the AR navigation device 10 according to an embodiment of the present disclosure may be provided with a wireless communication unit 170. Furthermore, the wireless communication unit 170 may include at least one of a wireless Internet module 171, a short-range communication module 172, and a position information module 173.

The wireless Internet module 171, which refers to a module for wireless Internet access, may provide a communication connection to a preset external server that provides information on various POI entities identified from the camera space. The wireless Internet module 171 may be configured to transmit and receive data to and from the external server according to at least one of wireless Internet technologies such as Wireless LAN (WLAN), Wireless-Fidelity (Wi-Fi), Wireless Broadband (WiBro), and Long Term Evolution (LTE).

Furthermore, the short-range communication module 172, which is a module for short-range communication, may support short-distance communication using at least one of short-range communication technologies such as Bluetooth^{™}, Infrared Data Association (IrDA), and Wi-Fi. Using the short-distance communication module 172, the controller 100 may receive and transmit data from and to other devices or servers located around the user.

In addition, the position information module 173 is a module for acquiring the AR navigation device 10, and representative examples thereof include a Global Positioning System (GPS) module or a Wireless Fidelity (WiFi) module. For example, the AR navigation device 10 may utilize a GPS module to acquire the position of itself or POI entities from signals received from GPS satellites.

As another example, the AR navigation device 10 may utilize a Wi-Fi module to transmit or receive a wireless signal to or from the Wi-Fi module, and may acquire the position of itself or POI entities based on information from a wireless access point (AP) that transmits and receives wireless signals to and from the Wi-Fi module. The position information module 173, which is a module used to acquire the position of the AR navigation device 10 and the positions of itself or POI entities, and is not limited to a module that directly calculates or acquires the position.

Furthermore, the memory 160 may store data supporting various functions of the AR navigation device 10 according to an embodiment of the present disclosure. The memory 160 may store a plurality of application programs or applications running on the AR navigation device 10 and data and commands for operating the AR navigation device 10.

For example, the memory 160 may store information for the POI entity detection unit 120 to detect POI entities within the camera space. In addition, the memory 160 may store a plurality of conversion matrices for the coordinate conversion unit 130 to convert the coordinates (POI entity coordinates) detected by the POI entity detection unit 120 and information for the coordinate conversion. In addition, the memory 160 may store information on respective POI entities as information for generating AR entities, and store information (sizes, shapes, and colors of virtual images, etc.) for rendering virtual images corresponding to the AR entities. At least some of those information may be received from an external server or external device through wireless communication, or may be information stored in the memory 160 from the time the AR navigation device 10 is shipped.

Meanwhile, the controller 100 may control an overall operation of the AR navigation device 10 according to an embodiment of the present disclosure. The controller 100 may control the camera 110 to acquire image information in front of the user, and control the display 150 to output the image information acquired from the camera 110 to the display area. Furthermore, from the image information acquired through the camera 110, the controller 100 may control the POI entity detection unit to detect POI entities located within the camera space. Then, the controller 100 may control the coordinate conversion unit 130 to convert coordinates according to any one of a plurality of coordinate conversion matrices stored in the memory 160, and convert the coordinates of the detected POI entities (POI entity coordinates) into coordinates in a clip space, an NDC space, and an orthographic projection space. Additionally, the controller 100 may control the rendering unit 140 to render AR entities corresponding to respective POI entities at positions in the display area corresponding to coordinate positions in the converted orthographic projection space. Here the display area may be an area in which image information acquired through the camera 110 is displayed.

Meanwhile, although not shown in FIG. 1, the AR navigation device 10 according to an embodiment of the present disclosure may further include an audio output unit (not shown) capable of outputting an audio signal. Furthermore, navigation information on at least one adjacent AR entity may be output as voice information through the audio output unit.

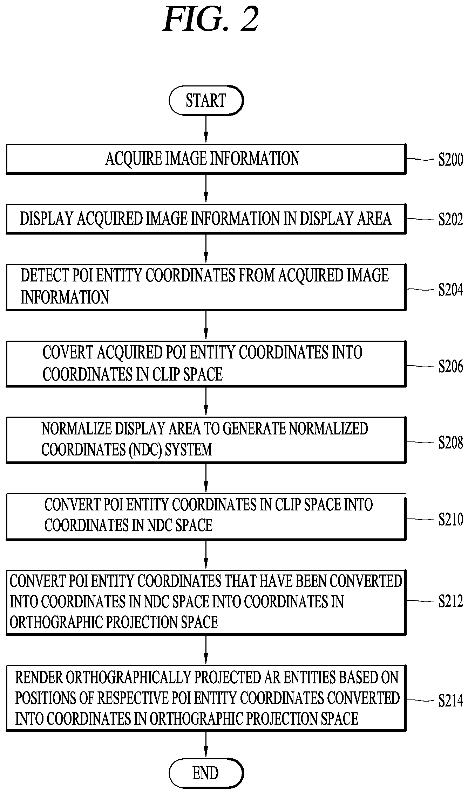

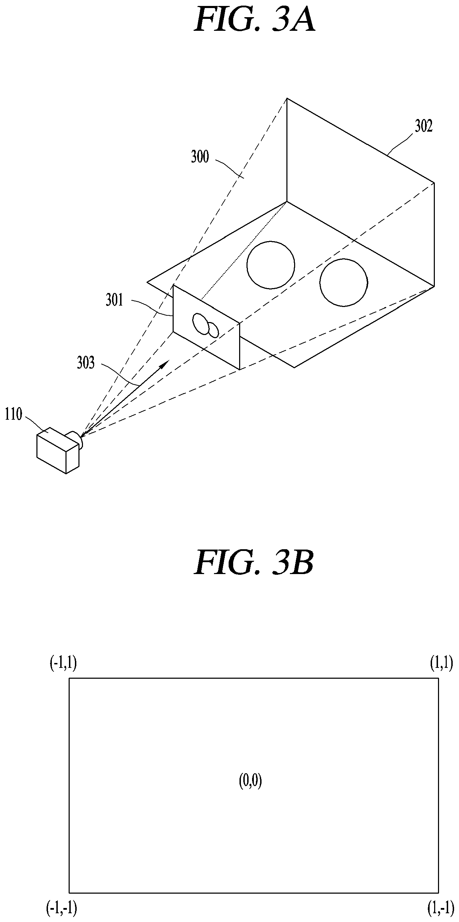

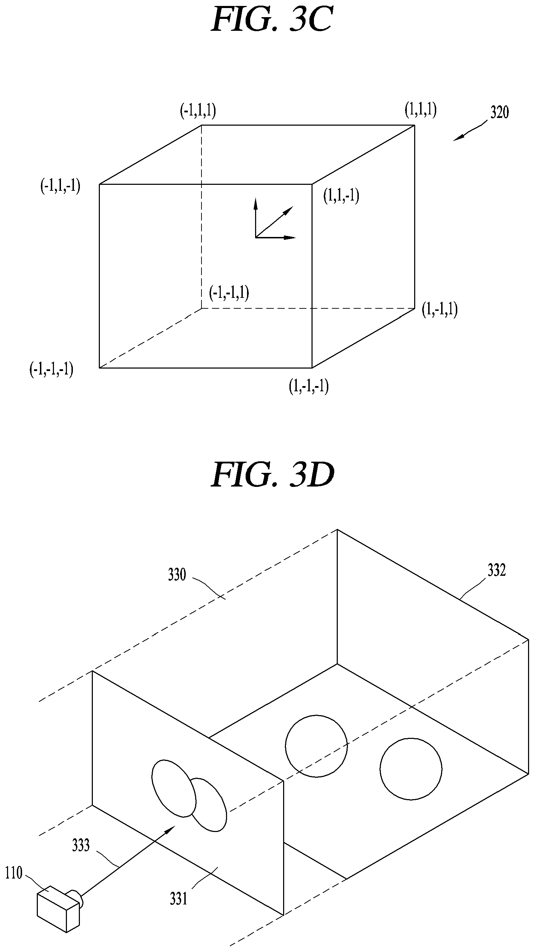

FIG. 2 is a flowchart showing an operation process of displaying AR entities in a display area in which image information based on image information acquired from the camera 110 is displayed in the AR navigation device 10 according to an embodiment of the present disclosure. FIGS. 3A and 3B are conceptual diagrams for explaining examples of a frustum-shaped clip space and an NDC coordinate system, respectively, and FIGS. 3C and 3D are conceptual diagrams for explaining examples of a three-dimensional NDC coordinate system and an orthographic projection space, respectively.

First, referring to FIG. 2, the controller 100 of the AR navigation device 10 according to an embodiment of the present disclosure may first acquire image information from the camera 110 (S200). Here, the camera 110 may acquire an image in front of a user with the user at the center. In more detail, the camera 110 may acquire image information corresponding to a preset viewing angle centered on a line of sight (LOS) corresponding to the front of the user.

Furthermore, the acquired image information may be output to at least part of the display 150 (S202). Hereinafter, at least a partial area on the display 150 where the image information is displayed will be referred to as a display area. Furthermore, the image information displayed in the display area may be image information that reflects a wide viewing angle of the camera 110 and a distortion due to a depth value according to a difference in distance to the camera 110.

Meanwhile, the controller 100 may detect POI entities located within the camera space. Furthermore, the coordinates of the detected POI entities, that is, the POI entity coordinates, may be detected (S202). In this case, the POI entity coordinates, which are the coordinates of a representative point corresponding to the detected POI entity, may be the coordinates of a point (e.g., center point) in an area within the image information corresponding to the POI entity.

Here, the camera space may refer to a space in front of the user displayed in the display area by image information acquired from the camera 110. Furthermore, POI entities may be entities that include geographical entities such as buildings or roads that are preset to display AR entities including information thereto.

As an example, the geographical entity may be a specific building or part (e.g., a floor) of a specific building located within the camera space. Alternatively, the geographical entity may be a structure such as a road or bridge, or a natural geographical feature such as a river or hill. In order to detect those POI entities, the controller 100 may use POI detection information stored in the memory 160, and the POI detection information may include identification information for identifying a specific geographical entity, such as position information of POI entities or a logo of a specific company.

Meanwhile, the controller 100 may convert the POI entity coordinates acquired in the step S202 into coordinates in a clip space (S204). Here, the clip space 300, which is a space for rendering AR entities, as shown in FIG. 3A, may be a frustum-shaped space according to a field of view (FOV) formed based on a line of sight (LOS) 303 of the camera 110. To this end, the controller 100 may convert the respective POI entity coordinates into coordinates in a clip space according to an MVP matrix among the coordinate conversion matrices stored in the memory 160.

Here, the clip space refers to a space for rendering AR entities, and in the case of the AR navigation device 10 that displays AR entities, which are virtual images on an actual image acquired by the camera 110, a space corresponding to the image information, that is, a space identical to the camera space, may be formed as a clip space. Therefore, as shown in FIG. 3A, the clip space 300, which is a space for rendering AR entities, may be formed as a space between two parallel planes (a near plane 301 and a far plane 302) that cut a square pyramid-shaped area formed based on a viewing angle of the camera 110.

Therefore, a size of an entity projected on the plane varies depending on a distance between a plane on which the entity is projected and the camera 110, and the central coordinates at the center of the entity also vary. That is, as shown in FIG. 3A, the closer the distance between the plane and the camera 110, the larger the size of the entity projected on the plane, and the farther the distance between the plane and the camera 110, the smaller the size of the entity projected on the plane. Therefore, the center coordinates of the entity also vary depending on a distance between the plane on which the entity is projected and the camera. That is, a distortion due to perspective may occur.

Meanwhile, in order to convert the POI entity coordinates acquired from the image information into coordinates in the clip space 300, the controller 100 may control the coordinate conversion unit 130 to convert the POI entity coordinates acquired from the image information based on an MVP transformation matrix. Here, the MVP transformation matrix may convert coordinates according to a perspective projection method to which perspective is applied as a human eye or a camera looks at the world. Therefore, the coordinates included in the image information, that is, the coordinates of respective POI entities (POI entity coordinates) that have a distance value to the camera 110 as a depth value, may be converted into coordinates having a depth value according to a distance from the clip space 300 to the camera 110.

Furthermore, the controller 100 may determine the coordinates of a display area corresponding to the coordinates (POI entity coordinates) in the clip space. To this end, the controller 100 may normalize an area corresponding to a size of the display area into a square with a width and height of 2 each, as shown in FIG. 3B, to generate a normalized device coordinate (NDC) system (S208).

Here, the normalized coordinate system may be formed in a three-dimensional stereoscopic space as shown in FIG. 3C to also normalize the depth values of respective POI entity coordinates. In this case, a range of a Z-axis of the three-dimensional stereoscopic space corresponding to the depth values may also have a value from -1 to 1. Hereinafter, a space of the normalized coordinate system (NDC) formed in the form of the three-dimensional stereoscopic space will be referred to as an NDC space 320.

Then, the controller 100 may convert the coordinates (POI entity coordinates) in the clip space into coordinates in the NDC space 320 according to a normalized coordinate system (S210). To this end, the controller 100 may control the coordinate conversion unit 130 to convert coordinates (POI entity coordinates) in the clip space using an inverse conversion matrix provided by advanced driver assistance systems (ADAS). Alternatively, the controller 100 may control the coordinate conversion unit 130 to convert coordinates (POI entity coordinates) in the clip space through a conversion from the screen space coordinates of a display area, that is, X and Y axes of the display area, into coordinates, which are assumed to be X and Y axes of the coordinate system, respectively. In this case, the coordinate conversion unit 130 may normalize respective POI entity coordinate values (X-axis, Y-axis, Z-axis values) in the clip space 300 by dividing them bay a size of a display area, thereby converting the coordinates (POI object coordinates) in the clip space into coordinates in the NDC space 320 according to the size of the display area. Through a coordinate conversion into the NDC space 320, the controller 100 may acquire coordinates in the display area corresponding to the POI entity coordinates.

Meanwhile, when converted into coordinates in the NDC space 320 through the step S210, the controller 100 may convert the POI entity coordinates that have been converted into the coordinates in the NDC space into coordinates in an orthographic projection space (S212).

Here, as shown in FIG. 3D, the orthographic projection space 330 may be formed as a rectangular parallelepiped space between two parallel planes (a near plane 331 and a far plane 332) that vertically cut a square pillar-shaped area parallel to a line of sight (LOS) 333 of the camera 110. Therefore, as shown in FIG. 3D, in the orthographic projection space 330, a size of an entity projected on a plane always becomes the same regardless of a distance between the plane on which the entity is projected and the camera 110, and the center coordinates at the center of the entity becomes the same. In other words, a distortion due to perspective does not occur.

For such a coordinate conversion, the controller 100 may control the coordinate conversion unit 130 to convert the POI entity coordinates that have been converted into coordinates in the NDC space based on an orthographic projection matrix stored in the memory 160.

Furthermore, when the POI entity coordinates are converted into coordinates in the orthographic projection space 330, the controller 100 may control the rendering unit 140 to render virtual images including information corresponding to respective POI entities, that is, AR entities, based on the respective converted POI entity coordinates (S214). Therefore, the controller 100 may control the rendering unit 140 such that the AR entities are generated in the orthographic projection space 330. In this case, since the POI entity coordinates have depth values corresponding to distances to the camera 110, the AR entities may be entities rendered on orthogonal planes that are orthogonal to a line of sight (LOS) 333 of the camera 110 and are formed according to different distance values to the camera 110. Therefore, for the AR entities, a size of a model, or a subject, does not vary depending on a distance to the camera 110, that is, a depth value, and accordingly, a distortion due to perspective may not occur.

Meanwhile, the AR entities may be displayed in a display area that displays image information acquired from the camera 110. Accordingly, the AR entities, among the image information displayed in the display area, may be displayed in an area in which POI entities are displayed or in part of the area. In this case, the image information acquired from the camera 110 is an image in a frustum-shaped camera space described in FIG. 3A, and thus perspective according to a perspective projection method may be reflected. However, the AR entities displayed on the image information are images in an orthographic projection space as shown in FIG. 3D, and therefore, may be images with no distortion due to perspective.

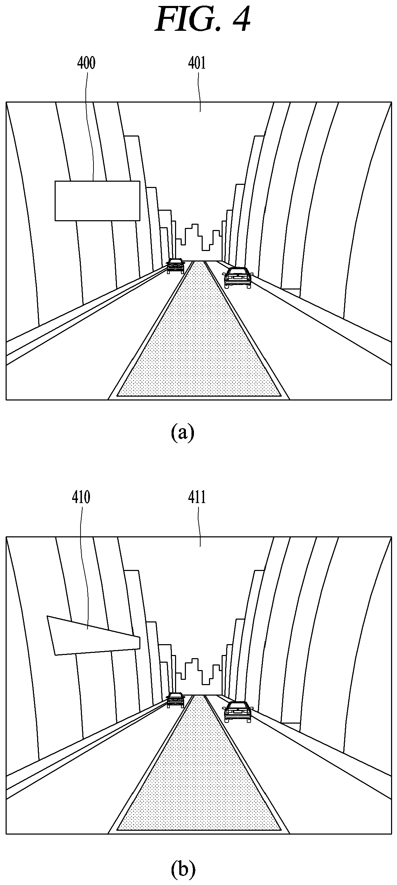

FIG. 4 is an exemplary diagram illustrating an example of navigation information including an AR entity displayed according to such an embodiment of the present disclosure and navigation information including an AR entity in which distortion according to perspective is typically reflected.

(a) of FIG. 4 shows an example of an augmented reality image in which an AR entity is displayed in the AR navigation device 10 according to the foregoing embodiment of the present disclosure, and (b) of FIG. 4 shows an example of an augmented reality image in which an AR entity is displayed in a conventional AR navigation device.

First, referring to (a) of FIG. 4, (a) of FIG. 4 shows an example of a display area of the AR navigation device 10 according to an embodiment of the present disclosure in which image information 401 acquired from a camera, and an AR entity 400 on the image information 401 are displayed.

In the case of (a) FIG. 4, in the AR navigation device 10 according to an embodiment of the present disclosure, it is seen that in the case of image information 401, the exterior of a building adjacent to the user appears curved due to a distance difference from the camera, that is, a distortion due to perspective, but such a distortion due to perspective does not appear in the AR entity 400. That is, the AR entity 400 provided by the AR navigation device 10 according to an embodiment of the present disclosure may always be displayed in a distinct shape regardless of distortion, and thus may have high visibility, and the user may more easily identify information displayed through the AR entity.

Meanwhile, as shown in (b) of FIG. 4, in a conventional AR navigation device, not only the image information 411 but also the AR entity 410 may be displayed in a curved or twisted state due to a distance difference from the camera, that is, a distortion due to perspective. That is, in the case of the acquired image information 411, a size thereof becomes smaller the closer it is to the center of the display area due to perspective, and the larger it is displayed outside the display area, and accordingly, a size of the AR entity 410 may also become smaller the closer it is to the center of the display area, and the larger it is displayed outside the display area. Due to a distortion based on such a size difference, the AR entity 410 displayed in a conventional AR navigation device has a problem in that its visibility is lowered, and it is difficult for the user to identify information displayed through the AR entity 410.

Meanwhile, the AR navigation device 10 according to the embodiment of the present disclosure may display AR entities through another layer formed separately from a layer on which image information acquired from the camera 110 is displayed, and allow the two layers to overlap each other, thereby displaying AR entities that do not exhibit a perspective distortion, that is, a distortion due to perspective in an image according to a perspective projection method, on an image that exhibits the perspective distortion.

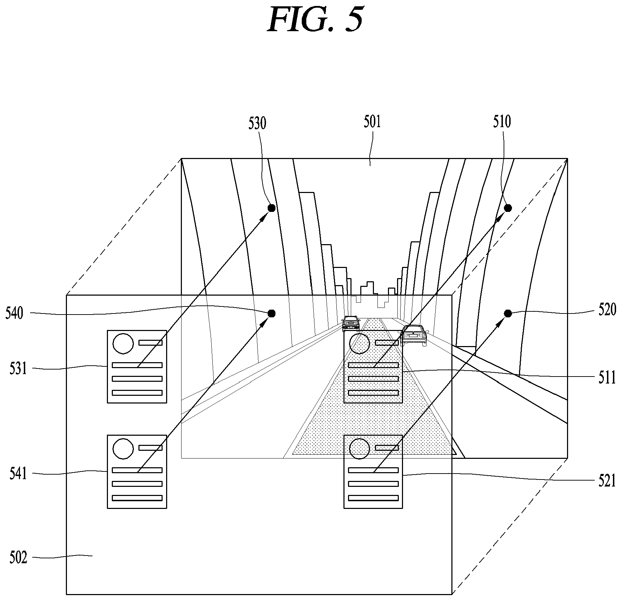

FIG. 5 is a conceptual diagram showing an example of displaying an augmented reality image in the AR navigation device 10 according to an embodiment of the present disclosure in this case.

Referring to FIG. 5, the AR navigation device 10 according to an embodiment of the present disclosure may display image information acquired from the camera 110 on a first layer 501 corresponding to a display area. In this case, the image displayed on the first layer 501 may have a perspective distortion phenomenon as shown in FIG. 5.

Meanwhile, the controller 100 of the AR navigation device 10 according to an embodiment of the present disclosure may detect a POI entity from image information acquired from the camera 110, and detect POI entity coordinates for the detected POI entity. Furthermore, according to the steps S206 to S212 of FIG. 2, the detected POI entity coordinates may be converted into coordinates in a clip space, coordinates in an NDC space, and coordinates in an orthographic projection space.

Furthermore, in the step S214 of FIG. 2, the controller 100 may detect coordinates on a second layer 502 corresponding to POI entity coordinates 510, 520, 530, 540 that have been converted into coordinates in the orthographic projection space. Additionally, AR entities including information corresponding to respective POI entities may be rendered based on respective coordinates detected in the second layer 502.

Here, the second layer 502, which is a layer having the same size as the first layer 501, may be a layer whose coordinates of a specific position, that is, screen space coordinates, are the same as those of the first layer 501. Accordingly, the coordinates on the second layer 502 having the same coordinate values as those of the coordinates 510, 520, 530, 540 detected on the second layer 502 may be coordinates corresponding to positions at which the respective POI entities are displayed in an image displayed on the first layer 501, that is, coordinates corresponding to the POI entity coordinates.

Therefore, as shown in FIG. 5, at the respective positions of the second layer 502 in which the respective POI entities are displayed in the image displayed on the first layer 501, AR entities 511, 521, 531, 541 that respectively correspond to the POI entities may be displayed. Furthermore, the second layer 502 may be overlapped on the first layer 501. Accordingly, AR entities (the second layer 502) that do not exhibit a perspective distortion may be displayed to overlap on the image (the first layer 501) that exhibits the perspective distortion.

Meanwhile, when a perspective distortion is prevented from occurring in respective AR entities by rendering and displaying the AR entities in an orthographic projection space, the AR entities may not change in size depending on a distance difference to the camera 110. In this case, the user may not intuitively recognize a distance to a POI entity corresponding to each AR entity. Accordingly, the present disclosure may solve the problem by determining a size of the AR entity based on a distance between the POI entity and the camera 110.

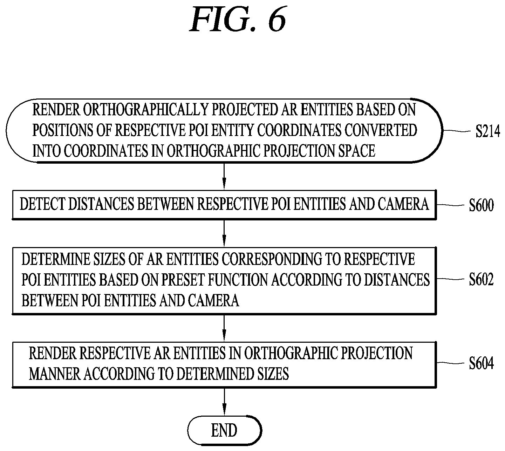

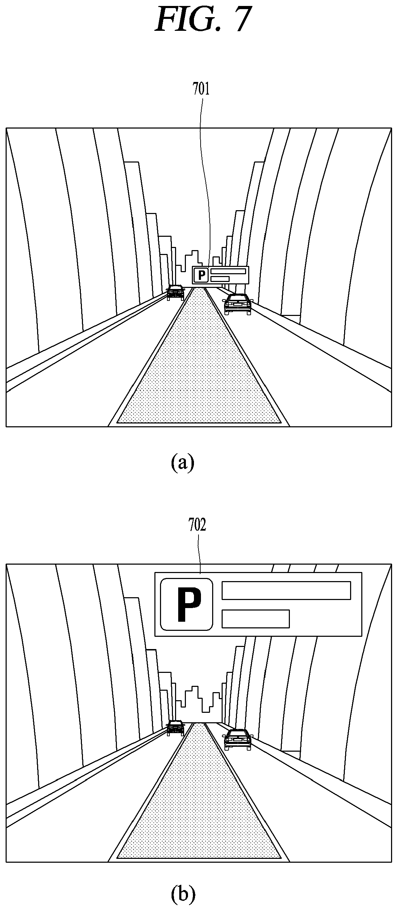

FIGS. 6 and 7 are a flowchart showing an operation process of determining, by the AR navigation device 10 according to an embodiment of the present disclosure, sizes of AR entities differently depending on distances between respective POI entities and a camera as described above, and an example thereof.

First, referring to FIG. 6, the AR navigation device 10 according to an embodiment of the present disclosure may first detect distances between the respective POI entities and the camera 110 when AR entities are rendered in the step S214 of FIG. 2 (S600). Here, the distances between the POI entities and the camera 110 may correspond to depth information possessed by the respective POI entity coordinates.

Then, the controller 100 may determine sizes of the AR entities according to the distances between the POI entities and the camera 110 based on a preset function (S602). Furthermore, the controller 100 may render AR entities in an orthographic projection space corresponding to respective POI entities based on sizes determined according to the distances between the POI entities and the camera 110 (S604).

Therefore, as shown in (a) of FIG. 7, when a distance between the camera 110 and the POI entity is long, an AR object 701 having a small size may be rendered in an orthographic projection manner in inverse proportion to the distance between the camera 110 and the POI entity. On the contrary, as shown in (b) of FIG. 7, when a distance between the camera 110 and the POI entity is short, an AR entity 702 having a large size may be rendered in an orthographic projection manner in inverse proportion to the distance between the camera 110 and the POI entity.

That is, the present disclosure may eliminate perspective according to distances to POI entities by displaying AR entities in an orthographic projection space, but adjust sizes of the displayed AR entities based on a preset function according to the distances to the POI entities, thereby exhibiting distances between the user and the POI entities corresponding to the respective AR entities.

Meanwhile, in FIG. 6, the preset function that determines a size of an AR entity according to a distance to a POI entity may be a linear function in which a size of the AR entity is inversely proportional to a change in distance between the POI entity and the camera 110. In this case, as the distance between the POI entity and the camera 110 decreases, the size of the AR entity may increase, and as the distance between the POI entity and the camera 110 increases, the size of the AR entity may decrease. In this case, the size of the AR entity may increase as the distance decreases according to a proportional relationship, and the size of the AR entity may decrease as the distance increases.

Alternatively, the preset function that determines the size of the AR entity may be a quadratic function in which a size of the AR entity is inversely proportional to the square of a change in distance between the POI entity and the camera 110. In this case, as the distance between the POI entity and the camera 110 decreases, the size of the AR entity may dramatically increase, and as the distance between the POI entity and the camera 110 increases, the size of the AR entity may significantly decrease.

In this manner, when the size of the AR entity is determined according to the quadratic function, when a distance value between the POI entity and the camera 110 changes by a predetermined amount or more, the size of the AR entity becomes exponentially larger or smaller. Therefore, the user may intuitively recognize a change in distance to the POI entity from the change in size of the AR entity.

In addition, in the case of a quadratic function that is inversely proportional to the square of the distance as described above, the result is not large even if squared for a change in distance value below a predetermined size, so a change in the size of the AR entity may not be large for a change in the distance value below the determined size. Therefore, a small amount of distance value error caused by an error or the like in the position information module (e.g. GPS) has a small effect on a change in size of the AR entity. That is, there is an advantage in that a predetermined level of error may be absorbed.

Meanwhile, according to the present disclosure, AR entities may be displayed in an orthographic projection space to remove perspective depending on distances to POI entities, thereby preventing a resultant distortion of the AR entities. However, when AR entities are displayed in an orthographic projection space as described above, in the case of AR entities whose positions are adjacent to one another (e.g., AR entities corresponding to POI entities located on the same floor of a specific building), the AR entities may overlap one another, thereby causing a problem in that it is difficult to identify some AR entities that overlap with one another.

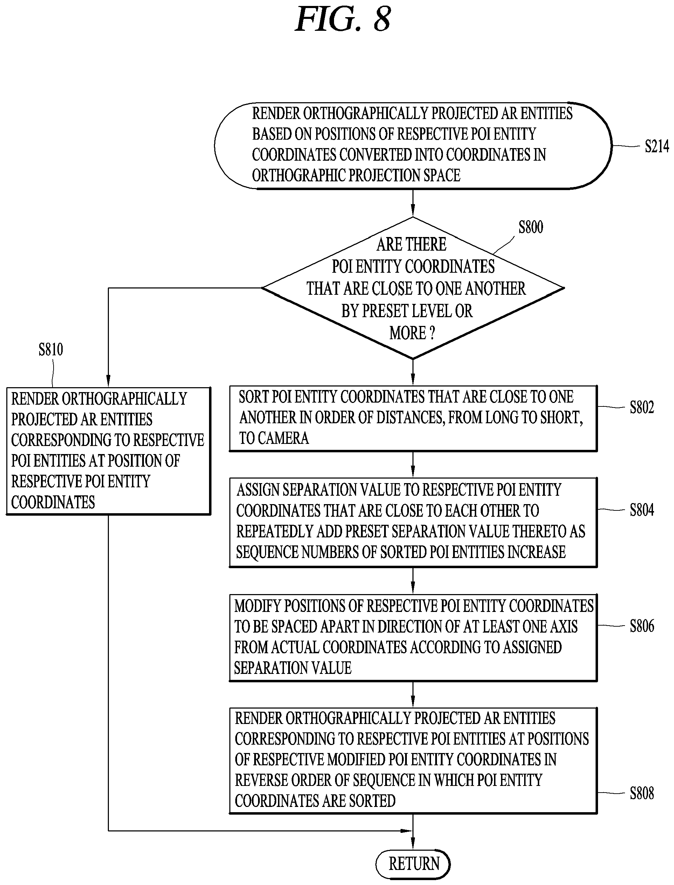

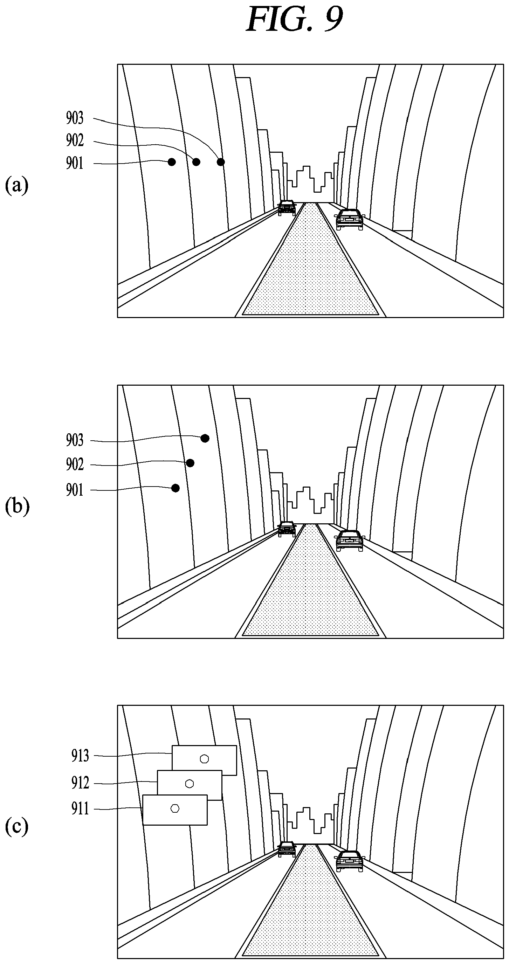

Accordingly, in the present disclosure, positions at which AR entities corresponding to POI entities adjacent to one another are displayed are modified, and FIG. 8 is a flowchart showing an operation process of an AR navigation device according to an embodiment of the present disclosure. Furthermore, FIG. 9 is exemplary diagrams showing an example in which the positions of AR entities corresponding to POI entities adjacent to one another on a display area are modified according to the process of FIG. 8.

First, referring to FIG. 8, when POI entity coordinates are converted into coordinates in an orthographic projection space in step S212 of FIG. 2, the controller 100 of the AR navigation device 10 according to an embodiment of the present disclosure may detect whether there are coordinates that are close to one another by a preset level or more among the converted POI entity coordinates (S800). Furthermore, as a result of the determination in the step S800, if there are no coordinates that are close to one another by a preset level or more, the controller 100 may render AR entities corresponding to respective POI entities based on the positions in the orthographic projection space corresponding to the respective POI entity coordinates.

However, as shown in (a) of FIG. 9, among the POI entity coordinates as coordinates in the orthographic projection space, when there are coordinates 901, 902, 903 in which height values in the display area, that is, coordinate values in the Y-axis, are similar to one another, the controller 100 may determine in the step S800 that there are POI entity coordinates that are close to one another by a preset level or more.

Then, the controller 100 may sort the POI entity coordinates that are close to one another in an order of distances, from long to short, to the camera 110 from POI entities corresponding to respective POI entity coordinates (S802). Furthermore, for the respective POI entity coordinates that are close to each other, as sequence numbers of the sorted POI entities increase, a preset separation value may be repeatedly added thereto (S804). Furthermore, the controller 100 may modify the positions of the respective sorted POI entity coordinates 901, 902, 903 in a direction along at least one axis from the coordinates in the orthographic projection space according to respective given separation values. (S906). Here, the at least one axis may refer to at least one of axes (e.g., X-axis, Y-axis) other than an axis (e.g., Z-axis) representing a depth value in the orthographic projection space.

Therefore, in (a) of FIG. 9, among the POI entity coordinates 901, 902, 903 that are close to one another, when a POI entity corresponding to the first entity coordinates 901 is located at the closest distance from the camera 110, and a POI entity corresponding to the third coordinates 903 is located at the farthest distance from the camera 110, the POI entity coordinates 901, 902, 903 may be sorted in the order of the first entity coordinates 901, the second entity coordinates 902, and the third entity coordinates 903 in the step S802. Furthermore, in step S804, a preset separation value may be assigned once to the second entity coordinates 902, which have a second sequence number, and the preset separation value may be assigned twice to the third entity coordinates 903, which have a third sequence number.

Therefore, assuming that the coordinate values are modified in a Y-axis direction, as shown in (b) of FIG. 9, the third entity coordinates 903 to which the separation value is assigned twice may be moved to the furthest position in the Y-axis direction from an actual coordinate position, and the second entity coordinates 902 to which the separation value is assigned once may be moved in the Y-axis direction by a smaller amount than the third entity coordinates 903. In this case, the position of the first entity coordinates 901, which have a first sequence number to which no separation value is assigned, may not change.

Meanwhile, when the positions of the POI entity coordinates are changed in the step S806, the controller 100 may render AR entities corresponding to respective POI entities in an orthographic projection space at positions corresponding to respective POI entity coordinates in a reverse order of a sequence of being sorted according to distances between the corresponding POI entities and the camera 110 (S808).

Therefore, when the positions of POI entities are changed as shown in (b) of FIG. 9, a third AR entity 913 including information on the POI entity corresponding to the third entity coordinates 903 may be rendered first at a current position of the third entity coordinates 903, which are the furthest away from the camera 110. Furthermore, a second AR entity 912 including information on the POI entity corresponding to the second entity coordinates 902 may be rendered at a current position of the second entity coordinates 902, which are the next furthest away from the camera 110. Furthermore, a first AR entity 911 including information on the POI entity corresponding to the first entity coordinates 901 may be finally rendered at a current position of the first entity coordinates 901 located at the closet distance to the camera 110.

In this manner, AR entities may be rendered first according to an order of distances, from long to short, between the camera 110 and POI entities, and therefore, an AR entity having a distance closer to the corresponding POI entity may be overlapped on an AR entity having a distance farther from the corresponding POI entity. Therefore, it may be possible to minimize a phenomenon in which an AR entity corresponding to a POI entity located closer is obscured by an AR entity corresponding to a POI entity located further away.

Meanwhile, the AR navigation device 10 according to an embodiment of the present disclosure may display AR entities in one area of a preset display area, and may also of course provide augmented reality images through connection lines connecting the displayed AR entities to POI entities corresponding to the respective AR entities.

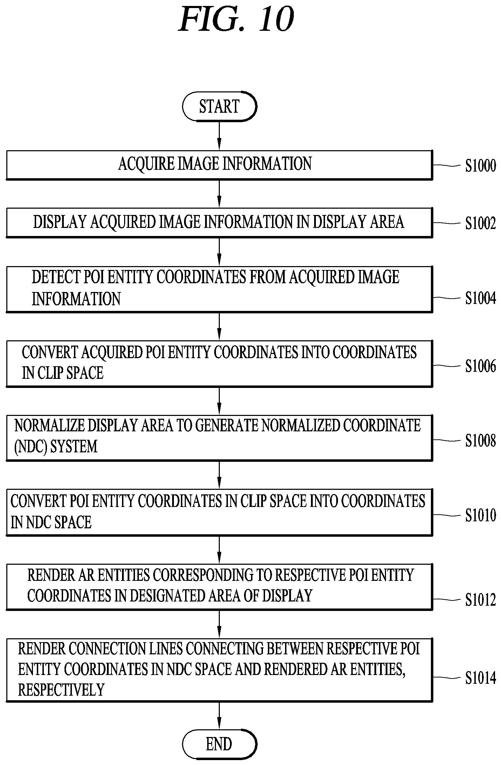

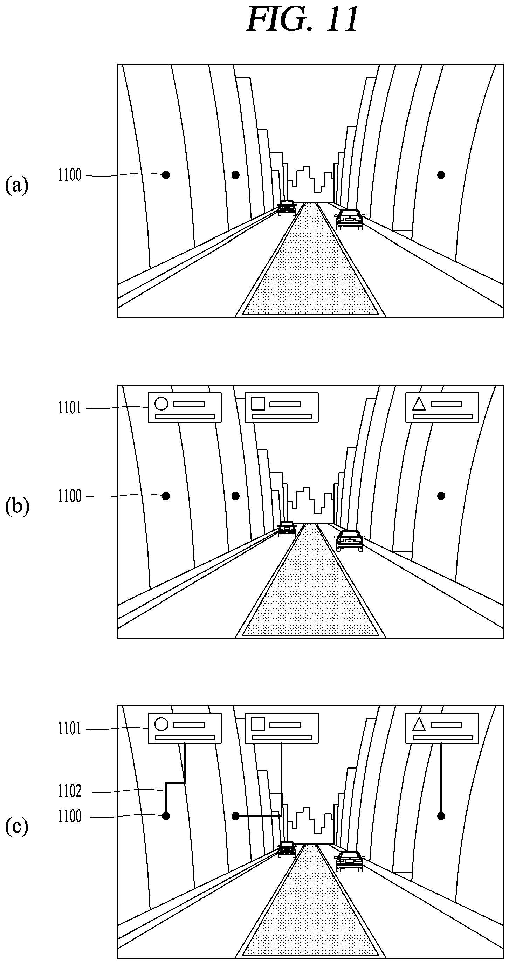

FIG. 10 shows an operation process of displaying, by the AR navigation device 10 according to an embodiment of the present disclosure, AR entities in one area on a designated display as described above. In addition, FIG. 11 is exemplary diagrams showing an example of an augmented reality image including AR entities displayed according to the operation process of FIG. 10.

First, referring to FIG. 10, the controller 100 of the AR navigation device 10 may acquire image information from the camera 110 (S1000). In this case, the camera 110 may acquire image information corresponding to a preset viewing angle centered on a line of sight (LOS) corresponding to the front of the user. Furthermore, the controller 100 may output the acquired image information to at least part of the display 150 (S1002). In this case, the image information displayed in the display area may be image information that reflects a wide viewing angle of the camera 110 and a distortion due to a depth value according to a difference in distance to the camera 110.

Meanwhile, the controller 100 may detect POI entities located in the camera space, and detect POI entity coordinates of the detected POI entities (S1004). In this case, the POI entity coordinates, which are the coordinates of a representative point corresponding to the detected POI entity, may be the coordinates of a point (e.g., center point) in an area within the image information corresponding to the POI entity.

Then, the controller 100 may convert the detected POI entity coordinates into coordinates in a clip space (S1006). To this end, the controller 100 may control the coordinate conversion unit 130 to convert the POI entity coordinates acquired from the image information based on an MVP transformation matrix.

Then, the controller 100 may generate a normalized coordinate system (NDC) by normalizing an area corresponding to a size of the display area (S1008). Furthermore, the controller may convert the coordinates (POI entity coordinates) in the clip space into coordinates in the NDC space according to the normalized coordinate system (S1010). To this end, the controller 100 may convert the coordinates (POI entity coordinates) in the clip space into coordinates in the NDC space using an inverse conversion matrix provided by ADAS, or through a conversion from the X and Y axes of the display area into coordinates, which are assumed to be X and Y axes of the coordinate system, respectively.

Through a coordinate conversion into the NDC space, the controller 100 may acquire coordinates in the display area corresponding to the POI entity coordinates, (a) of FIG. 11 shows an example of POI entity coordinates 1100 acquired from a display area through a coordinate conversion into an NDC space as described above.

Meanwhile, in the step S1010, when the coordinates of a display area corresponding to POI entity coordinates are acquired, the controller 100 may render AR entities including information on respective POI entities detected in the step S1004 in part of the designated display area (S1012).

In this case, the AR entities are displayed separately from the image information displayed in the display area, that is, the image information acquired from the camera 110, and may be displayed in the form of virtual images that do not reflect distance values between the POI entities and the camera 110. Therefore, the AR entities may be displayed in the form of images with no perspective distortion according to distance values between respective POI entities and the camera 110.

(b) of FIG. 11 shows an example in which AR entities displayed in the form of images with no perspective distortion are displayed in one area of the display area. Here, one area of the display area in which the AR entities are displayed may be a designated area that is preset by the user to display the AR entities.

Meanwhile, when AR entities are displayed in one area of the display area, the controller 100 may render connection lines between coordinates in an NDC space corresponding to respective POI entities acquired in the step S1010 and respective AR entities rendered in the step S1012 (S1014).

Therefore, as shown in (c) of FIG. 11, coordinates on the display area corresponding to POI entity coordinates and AR entities corresponding to respective POI entities may be connected to one another through the connection lines.

Furthermore, when AR entities are displayed in this manner, a process of converting POI entity coordinates in an NDC space into coordinates in an orthographic projection space may be omitted, and as a result, a time period for generating augmented reality images may be further shortened. In addition, since AR entities are displayed in a pre-designated area of the display area, even when the positions of POI entities are similar to one another, the AR entities corresponding thereto may be displayed at different positions, respectively. Therefore, it may be possible to prevent a case where AR entities overlap in such a manner that an AR entity is obscured by another AR entity.

Meanwhile, the step S1014 may also of course further include a process of allowing sizes of AR entities corresponding to respective POI entities to vary depending on distances between the POI entities and the camera 110, as described in FIG. 6. In this case, since the sizes of the AR entities vary depending on the distances to the POI entities, the user may intuitively recognize the distances to the POI entities according to the sizes of the AR entities.

Meanwhile, as part of an embodiment of displaying AR entities in a designated area as described above, similar to the configuration of FIG. 5, a method of displaying the AR entities on a separate layer that is separate from a layer on which image information acquired from the camera 110 is displayed, and displaying respective POI entities corresponding to the displayed AR entities by connecting them to the displayed AR entities using connection lines may be taken into consideration.

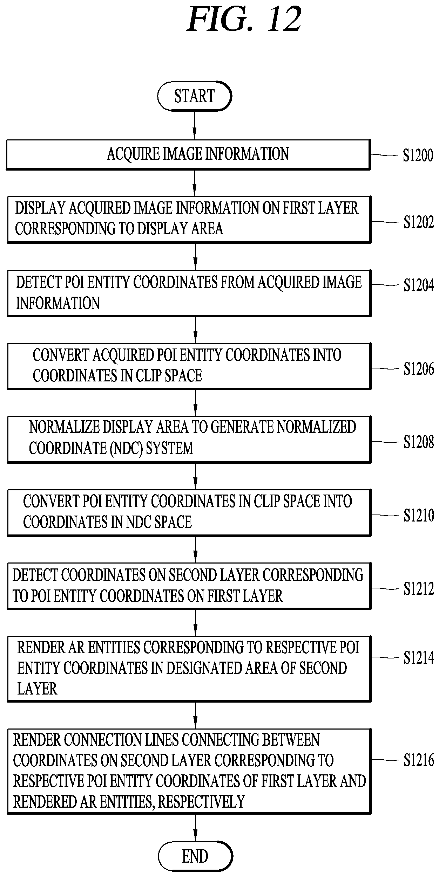

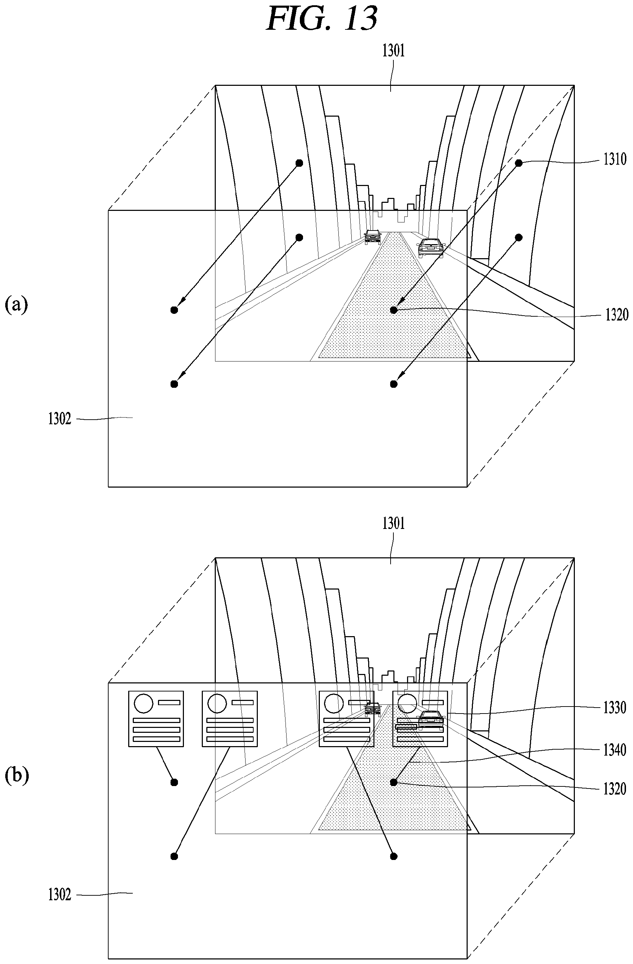

FIG. 12 is a flowchart showing an operation process of displaying, by the AR navigation device 10 according to an embodiment of the present disclosure, AR entities in which a distortion is not reflected using two overlapping layers as described above. Furthermore, FIG. 13 is conceptual diagrams for explaining a process of displaying AR entities according to the operation process of FIG. 12.

First, referring to FIG. 12, the controller 100 of the AR navigation device 10 may acquire image information from the camera 110 (S1200). In this case, the camera 110 may acquire image information corresponding to a preset viewing angle centered on a line of sight (LOS) corresponding to the front of the user. Furthermore, the controller 100 may output the acquired image information onto the first layer 1301 corresponding to the display area of the display 150 (S1202). In this case, the image information displayed in the first layer 1301 may be image information that reflects a wide viewing angle of the camera 110 and a distortion due to a depth value according to a difference in distance to the camera 110.

Meanwhile, the controller 100 may detect POI entities located in the camera space, and detect POI entity coordinates of the detected POI entities (S1204). In this case, the POI entity coordinates, which are the coordinates of a representative point corresponding to the detected POI entity, may be the coordinates of a point (e.g., center point) in an area within the image information corresponding to the POI entity.

Then, the controller 100 may convert the detected POI entity coordinates into coordinates in a clip space (S1206). To this end, the controller 100 may control the coordinate conversion unit 130 to convert the POI entity coordinates acquired from the image information based on an MVP transformation matrix.

Then, the controller 100 may generate a normalized coordinate system (NDC) by normalizing an area corresponding to a size of the display area (S1208). Furthermore, the controller may convert the coordinates (POI entity coordinates) in the clip space into coordinates in the NDC space according to the normalized coordinate system (S1210). To this end, the controller 100 may convert the coordinates (POI entity coordinates) in the clip space into coordinates in the NDC space using an inverse conversion matrix provided by ADAS, or through a conversion from the X and Y axes of the display area into coordinates, which are assumed to be X and Y axes of the coordinate system, respectively.

Through such a coordinate conversion into an NDC space, the controller 100 may acquire coordinates on the first layer 1301 corresponding to POI entity coordinates, (a) of FIG. 13 shows an example of POI entity coordinates 1310 acquired from the first layer 1301 through such a coordinate conversion into an NDC space.

Furthermore, the controller 100 may detect coordinates on the second layer 1302 corresponding to the POI entity coordinates 1310 acquired from the first layer 1301 (S1212). Here, the second layer 1302, which is a layer having the same size as the first layer 1301, may be a layer whose coordinates of a specific position, that is, screen space coordinates, are the same as those of the first layer 1301. Accordingly, coordinates 1320 on the second layer 1302 at the same position as the coordinates 1310 detected from the second layer 1302 may be coordinates corresponding to the POI entity coordinates acquired from the first layer 1301.

Then, the controller 100 may render AR entities including information on the POI entities detected in the step S1204 in a pre-designated area of the second layer 1302 (S1214). Here, the AR entities are displayed on the second layer 1302, which is separate from the first layer 1301, and may be displayed in the form of images with no perspective distortion.

Meanwhile, when AR entities are displayed in one area of the second layer 1302, the controller 100 may render connection lines connecting between the coordinates on the second layer 1302 acquired in the step S1212 and the rendered AR entities, respectively (S1216). Therefore, as shown in (b) of FIG. 13, AR entities 1330 corresponding to respective POI entities may be connected to the coordinates 1320 on the second layer 1302 corresponding to the respective POI entity coordinates 1310 detected from the first layer 1301, respectively, through connection lines 1340.

Furthermore, when AR entities are displayed using the second layer 1302, which is separate from the first layer 1301, a process of converting POI entity coordinates in an NDC space to coordinates in an orthographic projection space (step S212 in FIG. 2) may be omitted, and as a result, a time period for generating augmented reality images may be further shortened. Additionally, AR entities may be displayed at different positions, thereby preventing an AR entity from being obscured by another AR entity due to overlapping.

Meanwhile, the step S1214 may also further include a process of allowing sizes of AR entities corresponding to respective POI entities to vary depending on distances between the POI entities and the camera 110. In this case, since the sizes of the AR entities vary depending on the distances to the POI entities, the user may intuitively recognize the distances to the POI entities according to the sizes of the AR entities.

The foregoing present disclosure may be implemented as computer-readable codes on a program-recorded medium. The computer-readable medium may include all types of recording devices each storing data readable by a computer system. Examples of the computer-readable media can include a hard disk drive (HDD), a solid-state disk (SSD), a silicon disk drive (SDD), a ROM, a RAM, a CD-ROM, a magnetic tape, a floppy disk, and an optical data storage device, and the like, and also include a device implemented in the form of a carrier wave (for example, transmission via the Internet). The above detailed description is therefore to be construed in all aspects as illustrative and not restrictive. The scope of the present disclosure should be determined by reasonable interpretation of the appended claims and all changes that come within the equivalent scope of the present disclosure are included in the scope of the present disclosure.

## Claims

1. An augmented reality (AR) navigation device, the device comprising:
a camera that acquires a front image;
a display that displays an image acquired from the camera and at least one AR entity;
a POI entity detection unit that detects point-of-interest (POI) entities from image information acquired through the camera;
a coordinate conversion unit that sequentially converts coordinates of the detected POI entities based on a preset conversion matrix to convert them into coordinates in an orthographic projection space;
a rendering unit that renders AR entities including information on respective POI entities into a preset orthographic projection space; and
a controller that controls the coordinate conversion unit to convert the POI entity coordinates detected by the POI entity detection unit into coordinates in an orthographic projection space according to a screen of the display, controls the rendering unit to render AR entities including information on respective POI entities at respective positions of the POI entity coordinates converted to the coordinates of the orthographic projection space, and controls the display to display the rendered AR entities at the positions of the POI entity coordinates of the image acquired from the camera.

2. The device of claim 1, wherein the coordinate conversion unit converts the POI entity coordinates detected by the POI entity detection unit into coordinates in a clip space based on a model-view-projection (MVP) transformation matrix, converts the converted POI entity coordinates into coordinates in a normalized device coordinate (NDC) space according to the screen of the display, and converts the coordinates in the normalized space into coordinates in the orthographic projection space according to the screen of the display.

3. The device of claim 2, wherein the clip space, which is a space in which the AR entities are to be rendered, is a frustum-shaped space according to a field of view (FOV) of the camera, centered on a line of sight of the camera.

4. The device of claim 2, wherein the normalized coordinate system is a coordinate system in which an area corresponding to a size of the display screen is normalized into a square with a width and height of 2 each.

5. The device of claim 4, wherein the coordinate conversion unit converts POI entity coordinates in the clip space into coordinates in the NDC space based on an inverse conversion matrix provided by advanced driver assistance systems (ADAS).

6. The device of claim 4, wherein the coordinate conversion unit normalizes coordinate values of respective POI entity coordinates in the clip space by dividing them by a size of the display screen so as to convert the POI entity coordinates in the clip space into coordinates in an NDC space according to the size of the display screen.

7. The device of claim 2, wherein the coordinate conversion unit converts the POI entity coordinates that have been converted into the coordinates of the NDC space into coordinates in an orthographic projection space that corresponds to the size of the display screen and that is generated in a direction perpendicular to a line of sight of the camera.

8. The device of claim 1, wherein the controller varies sizes of AR entities corresponding to respective POI entities based on distances between respective POI entities in the camera.

9. The device of claim 8, wherein the controller determines, according to a distance between the camera and a specific POI entity, a size of an AR entity corresponding to the specific POI entity, based on a preset function, and
wherein the preset function is a quadratic function in which a size of an AR entity is inversely proportional to the square of a change in distance between the specific POI object and the camera.

10. The device of claim 1, wherein among the respective POI entity coordinates converted into the coordinates of the orthographic projection space, when there are coordinates that are close to one another by a predetermined level or more, the controller modifies the coordinate values of the respective POI entity coordinates that are close to one another such that the POI entity coordinates that are close to one another are spaced apart from one another according to distances between the respective POI entities and the camera.

11. The device of claim 10, wherein among the respective POI entity coordinates converted into the coordinates of the orthographic projection space, the controller determines that the POI entity coordinates with the same coordinates on a specific axis are coordinates that are close to one another by a predetermined level or more, and
wherein the specific axis is at least one of an X-axis and a Y-axis of the display screen.

12. The device of claim 11, wherein the controller assigns a preset separation value, and modifies the coordinate values of the respective POI entity coordinates that are close to one another according to distances between respective POI entities and the camera such that the POI entity coordinates that are close to one another are spaced apart from one another, and
wherein the preset separation value is reflected in a coordinate value in a direction of the specific axis among the coordinate values of the respective POI entity coordinates that are close to one another.

13. The device of claim 12, wherein the rendering unit renders, when the respective POI entity coordinates that are close to one another are spaced apart from one another according to the preset separation value, AR entities corresponding to respective POI entities according to the positions of the POI entity coordinates that are spaced apart from one another, and
renders AR entities corresponding to respective POI entities in a reverse order of distances, from long to short, between the POI entities and the camera among the POI entity coordinates that are close to one another.

14. The device of claim 1, wherein the controller generates a first layer on which an image acquired from the camera is displayed, renders the AR entities on a second layer having the same size as the first layer, and controls the display to overlap the second layer on the first layer.

15. The device of claim 1, wherein the controller controls the display to display the image acquired from the camera, and
controls the rendering unit to render AR entities including information on respective POI entities in a designated area of the display screen separately from the image acquired from the camera, and to render connection lines connecting between the respective POI entity coordinates converted into coordinates of the orthographic projection space and the respective AR entities rendered in the designated area.

16. The device of claim 1, wherein the controller generates a first layer and a second layer corresponding to a size of the display screen, displays the image acquired from the camera on the first layer, detects corresponding coordinates corresponding to POI entity coordinates in an orthographic projection space detected from the image acquired by the camera in the second layer, and renders AR entities including information on respective POI entities in a designated area of the second layer, and
renders connection lines connecting between the respective rendered AR entities and the respective corresponding coordinates on the second layer, and controls the display to overlap the second layer on the first layer.

17. An AR navigation method, the method comprising:
acquiring a front image through a camera;
displaying the acquired image on a display screen;
detecting point-of-interest (POI) entities from the acquired image information and detecting coordinates of the detected POI entities;
converting the coordinates of the detected POI entities into coordinates in a clip space based on a model-view-projection (MVP) transformation matrix;
converting the converted POI entity coordinates into coordinates in a normalized device coordinate (NDC) space according to the display screen;
converting the coordinates in the normalized space into coordinates in an orthographic projection space according to the display screen; and
rendering AR entities including information on respective POI entities at respective positions of the POI entity coordinates on the display screen converted into coordinates of the orthographic projection space.
